# EUROPEAN PATENT APPLICATION

(11) **EP 0 985 944 A1**
(43) Date of publication of application: **15.03.2000**
(21) Application number: 98440200.8
(22) Date of filing: 07.09.1998
(51) Int. Cl.: G02B 6/42, G02B 6/38, H01L 31/0203, H01L 33/00

(54) **Package for optoelectronic components**

(71) Applicant: ALCATEL, 75008 Paris (FR)
(72) Inventor: Tournereau, Alain, 45120 Chalette sur Loing (FR); Nicque, Jean-Louis, 75013 Paris (FR)
(74) Representative: Rausch, Gabriele, Dr.

(57) **Abstract**

A package for optoelectronic components (4) is disclosed consisting of a cover (1) and a lower part (2) with a recess (7) for prefabricated optoelectronic components with optical fiber pigtails. The cover (1) and the lower part (2) have grooves for receiving for at least one pigtail fiber (6) of the optoelectronic component (4) as well as means for making electrical connections to the component.

## Description

This invention relates to a package for optoelectronic components as set forth in the preamble of the main claim.

It is known in the art to fabricate optoelectronic components as discrete components. So-called hybrid circuits are disposed in packages on printed circuit boards and, if necessary, electrically or optically connected by means of a connector. The optical connectors are located outside the package, or use is made of optical connectors which are made as a single piece and are difficult to handle, particularly in the case of multifiber connections. Since optoelectronic components are increasingly being manufactured and contacted as surface mount components, changes in the shape and construction of the package are necessary.

The package according to the invention, with the characterizing features of the main claim, has the advantage that the cover and the lower part have grooves for receiving fibers as well as recesses for mounting the optoelectronic components, which are manufactured as surface mount components. This construction makes it possible to protect the optoelectronic components from external influences and to use simple fabrication and mounting processes. The complex and sensitive process for laying multifiber pigtails is simplified and rendered less critical by the prefabricated grooves.

By the measures recited in the subclaims, further developments and improvements of the package set forth in the main claim are possible. Particularly advantageously, the package is fabricated with **a so-called LIGA processed mould**, a combination of lithography, electroforming, and molding processes. This process can be used to advantages in the fabrication of packages from plastic materials. The type of material used is depended on the requirements placed on the package of the optoelectronic component.

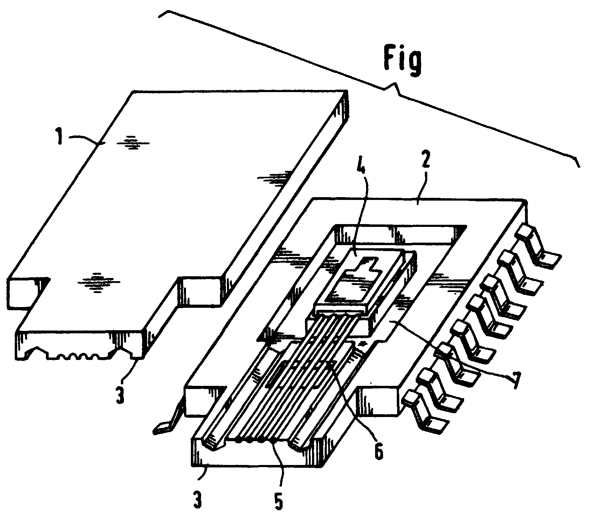

An embodiment of the invention will now be described with reference to the accompanying drawing.

The single figure shows a package 3 consisting of a cover 1 and a lower part 2. In the lower part 2, a recess 7 can be seen, in which an optoelectronic component 4 has been placed. The component 4 has several optical fiber pigtails 6. To receive and guide the fibers 6, grooves 5 are provided in the lower part 2 and in the cover 1. Electrical connections are made to the optoelectronic component by standard bonding techniques, such as beam-lead bonding. Bean-lead contacts of conductive material are electrodeposited and then connected to contact pads. The lower part 2 of the package has leads 8 which serve to interconnect the component in a complex system. The two parts of the package, i.e., the cover 1 and the lower part 2, are fabricated with **a LIGA processed mould**. This process is disclosed, for example, in DE 41 42 001. By deep X-ray lithography, a stepped microstructure is formed which corresponds with the structure of the polymeric part to be produced as the initial structure for the subsequent component. The stepped microstructure thus obtained is "recopied" by electroforming in a metallic mold insert. The structure of the mold insert is complementary to the structure of the previously formed stepped microstructure and to the structure of the part produced therefrom by electroforming. This process for forming a structure in a polymer serves to produce passive optical components. The invention is to use such a structure formed with the LIGA process for the manufacture of packages, i.e., not for passive optical components, but for parts of a package which serve to protect the optoelectronic components from impact, shock, temperature effects, etc. Grooves or ridges are formed for receiving and guiding the optical fiber pigtails. The ridges or grooves have, for example, rectangular sections with a side length of 1 to 1000 µm. Part of the cross section of the grooves may also be provided in the cover 1. After the manufacture of parts 1 and 2 of the package, the prefabricated surface mount component is placed in the recess provided in the lower part. Electrical connections are made to the component 4 by suitable techniques; if necessary, the component is joined to the supporting surface with adhesive. It may be attached to a header or directly to the bottom of the recess 7 of the lower part 2 of the package. The optical fiber pigtails are placed in the grooves and, if necessary, fixed in position. The fixing may be done by adhesive bonding. The fixing may be dispensed with if the guides are shaped with sufficient precision. Finally, the cover 1 is placed on the lower part 2 of the package and attached by suitable means (not shown), e.g., with adhesive or by means of screws. The package according to the invention can be readily adapted to future miniaturizations of components.

## Claims

1. A package (3) for optoelectronic components (4), consisting of an upper part in the form of a cover (1) and a lower part (2) which have at least one recess (7) for prefabricated optoelectronic components (4) with optical fiber pigtails, characterized in that at least the lower part (2) has grooves (5) for receiving at least one fiber pigtail (6) of the prefabricated optoelectronic component (4) as well as means for making electrical connections.

2. A package as claimed in claim 1 characterized in that the grooves (5) for receiving the fiber pigtails and the recesses (7) and elevations for the components (4) are formed with a LIGA process.

3. A package as claimed in claim 1 or 2, characterized in that the two parts of the package are made of a material that can be molded and that provides electrical insulation, with low thermal expansion coefficient.

4. A method of packaging, and making electrical connections to, optoelectronic components, characterized in that the optoelectronic components (4) are mounted in a lower part (2) of the package, that optical fiber pigtails are placed in grooves formed in the lower part of the package with a LIGA process, that the electrical connections are formed, and that a cover (1) is placed on and fixed to the lower part (2).
